Europäisches Patentamt

European Patent Office

Office européen des brevets

(19)

(11) Veröffentlichungsnummer: **0 120 325**
**B1**

(12) EUROPÄISCHE PATENTSCHRIFT

(45) Veröffentlichungstag der Patentschrift:
**11.05.88**

(51) Int. Cl.⁴: **H 04 M 9/08**

(21) Anmeldenummer: **84102045.6**

(22) Anmeldetag: **28.02.84**

(54) Schaltungsanordnung für einen Freisprechapparat.

(30) Priorität: **01.03.83 GB 8305572**

(43) Veröffentlichungstag der Anmeldung:
**03.10.84 Patentblatt 84/40**

(45) Bekanntmachung des Hinweises auf die Patenterteilung:
**11.05.88 Patentblatt 88/19**

(84) Benannte Vertragsstaaten:
**DE FR SE**

(56) Entgegenhaltungen:
**DE - A - 2 651 688**
**FR - A - 2 294 595**
**US - A - 3 970 786**
**US - A - 3 975 588**

**ELECTRONIC DESIGN CONFERENCES, 1980, Seiten 312-325, Rochelle Park, US; P. SEREV: "Single chip microcomputers in the subscriber end equipment"**

(73) Patentinhaber: **International Standard Electric Corporation, 320 Park Avenue, New York New York 10022 (US)**

(72) Erfinder: **Hansen, Bjorn Napier, 95 Shetland Road, Haverhill Suffolk. CB9 0LR (GB)**

(74) Vertreter: **Villinger, Bernhard, Dipl.-Ing. et al, Standard Elektrik Lorenz AG Patent- und Lizenzwesen Postfach 30 09 29, D-7000 Stuttgart 30 (DE)**

**Beschreibung**

Die Erfindung betrifft eine Schaltungsanordnung für einen Freisprechapparat mit getrennten Sprachkanälen für die abgehenden und ankommenden Sprachsignale gemäss dem Oberbegriff des Patentanspruchs 1.

Eine solche Schaltungsanordnung ist aus der US-Patentschrift 3 970 786 bekannt.

Die Entscheidung, welcher Kanal durchgeschaltet wird, wird hier aufgrund eines direkten Vergleichs der Sprachsignale auf beiden Kanälen getroffen. Der Geräuschpegel auf den Kanälen wird beim Vergleich berücksichtigt. Als Kriterium zur Unterscheidung der Sprachsignale von Geräuschsignalen dient die Dynamik der auftretenden Signale. Zwei Stromkreise mit unterschiedlicher Zeitkonstante trennen mit hoher Dynamik auftretende Sprachsignale von Geräuschsignalen die eine geringe Dynamik aufweisen.

Die bekannte Schaltungsanordnung arbeitet mit analogen Schaltgliedern und ist dadurch empfindlich gegenüber allen Einflüssen, die Veränderungen der Bauelemente oder der Einstellung hervorrufen können. Ausserdem wird der Geräuschpegel nur unvollkommen berücksichtigt. Geräusche mit hoher Dynamik können mit Sprachsignalen verwechselt werden. Eine Berücksichtigung stark unterschiedlicher Geräuschpegel auf beiden Kanälen ist nicht möglich.

In der DE-Offenlegungsschrift 2 651 688 ist eine andere Schaltungsanordnung für sprachgesteuerte Freisprechgeräte beschrieben. In dieser Schaltungsanordnung findet zur Sprachrichtungssteuerung ebenfalls ein direkter Vergleich des Pegels des Sendekanals mit dem Pegel des Empfangskanals statt. Die Sprachsignale werden hierzu abgetastet und in Pulszahl-Modulationssignal übergeführt. Letztere werden in einer Zählerkette nach Richtung und Anzahl ausgewertet. Als Kriterium für die Unterscheidung der Sprachsignale vom Geräuschpegel wird ausgenutzt, dass Sprachsignale von Pausen unterbrochen sind, während dies für Geräuschsignale im allgemeinen nicht zutrifft. Geräusche, die Unterbrechungen aufweisen wie z.B. das Geräusch einer Schreibmaschine können hier jedoch zu einer ungewollten Durchschaltung des Sendekanals führen.

Der Erfindung liegt die Aufgabe zugrunde, eine Schaltungsanordnung der vorstehenden Art anzugeben, die zuverlässig und driftfrei arbeitet und deren Sprachrichtungsumschaltung weitgehend unbeeinflusst von den Geräuschpegeln der beiden Kanäle bleibt, auch wenn diese Geräuschpegel unterschiedlich hoch sind.

Diese Aufgabe wird durch die im kennzeichnenden Teil des Patentanspruchs 1 aufgeführten Merkmale gelöst. Durch den getrennten Vergleich der die Sprachsignalpegel auf den beiden Kanälen repräsentierenden Abtastwerte mit getrennten, den Kanälen zugeordneten Schwellenwerten können bei der Geräuschpegelberücksichtigung beide Kanäle voneinander getrennt behandelt werden, was die Berücksichtigung von stark unterschiedlichen Geräuschpegeln auf den beiden Kanälen erleichtert. Mittels des eingesetzten Datenprozessors lassen sich die Vergleichs- und Steuerungsoperationen zuverlässig und wirtschaftlich durchführen. Driftempfindliche analoge Bauelemente werden nicht mehr benötigt.

Vorteilhafte Ausgestaltungen der Schaltungsanordnung nach der Erfindung sind den Unteransprüchen 2 bis 6 zu entnehmen.

Die Erfindung wird nun anhand von Ausführungsbeispielen näher erläutert. Es zeigen:

Fig. 1 ein vereinfachtes Blockschaltbild eines digitalen Freisprechapparates,

Fig. 2 ein Blockschaltbild zur Darstellung der Verarbeitung von PCM-codierten Sprachabtastwerten unter der Steuerung eines Mikroprozessors,

Fig. 3 ein Zeitdiagramm zur Darstellung der PCM-Code-Verarbeitung während der Programmausführung,

Fig. 4 bis 10 Programmflussdiagramme zur Darstellung der Arbeitsweise des Fernsprechapparates.

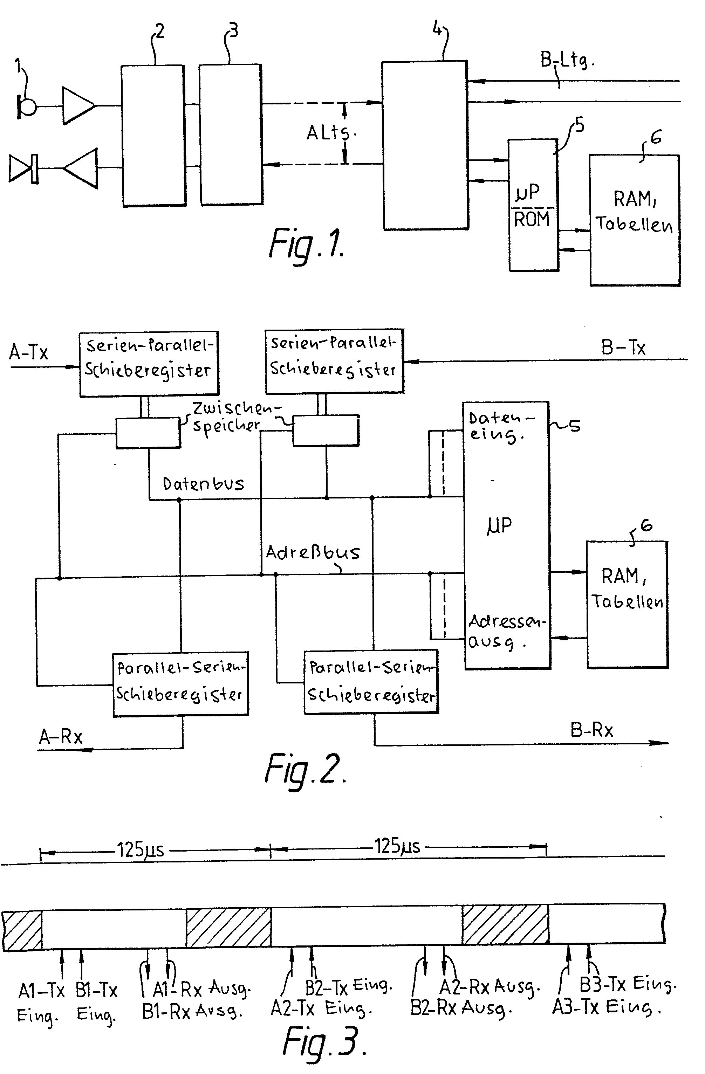

Das in Fig. 1 dargestellte Blockschaltbild benutzt Sprachsignale, die nach der sogenannten A-Kennlinie PCM-codiert sind, obgleich die Erfindung auch mit anders digital codierten Sprachsignalen arbeiten kann.

Das analoge Signal vom Mikrofon 1 wird verstärkt und dann einem Filter 2 zugeleitet, in dem das Signalband begrenzt ist. Ein Decodierer 3 tastet dann die analogen Signale ab und führt die PCM-Codierung der abgetasteten Signalamplitudenwerte aus. Die PCM-Codezeichen werden dann zu einer Anpassungsschaltung 4 übertragen, wo sie in ein Format überführt werden, das für den Empfang durch einen Datenprozessor 5 geeignet ist. Die Codezeichen werden dann in einem Kurzzeitregister gespeichert, bis sie vom Prozessor gebraucht werden. Zur gleichen Zeit werden PCM-Codezeichen von der B-Leitung (Anschlussleitung) empfangen und gespeichert. Nach der Verarbeitung durch den Prozessor werden die Codezeichen mittels eines Registerpaares in ihre zugehörigen Richtungen weiterübertragen. Dies ist im Prinzip in Fig. 2 gezeigt (die im wesentlichen die Anpassungsschaltung 4 näher darstellt).

Die Anpassungsschaltung 4 weist auch eine Zeitschaltung auf, die zur Erzeugung der erforderlichen Takt- und Synchronisationssignale für den Decodierer 3 nötig ist. Ein von dieser Zeitschaltung abgeleitetes Signal wird dazu benutzt, den Datenprozessor taktgleich mit der Abtastung zu unterbrechen, wobei während jeder Unterbrechungszeit (Interrupt) die PCM-Codezeichen eingeschrieben, verarbeitet und weiterübertragen werden.

Der Programmfluss ist in Fig. 3 dargestellt. Während der Ausführung der Unterbrechungsroutine wird die von den beiden Übertragungsrichtungen stammende Signalamplitudeninformation in einen Näherungswert der entsprechenden Spracheinhüllenden überführt, und der sich ergebende Parameter für jede Richtung wird dem Hauptprogramm zur Verfügung gestellt. Ein Geräuschüberwachungsalgorithmus ist ebenfalls in dieser Routine untergebracht. Während der Ausführung des Hauptprogramms wird jeder Spracheinhüllende-Parameter mit einem bestimmten Schwellwert verglichen, und der geeignete Sprachkanal wird dann mit Hilfe von zwei Dämpfungstabellen durchgeschaltet oder teilweise gesperrt, wobei die eine Dämpfungstabelle für den Sprachsendekanal und die andere Dämpfungstabelle für den Schrachempfangskanal vorgesehen ist. Im folgenden wird die Software zur Steuerung des Prozessors beschrieben.

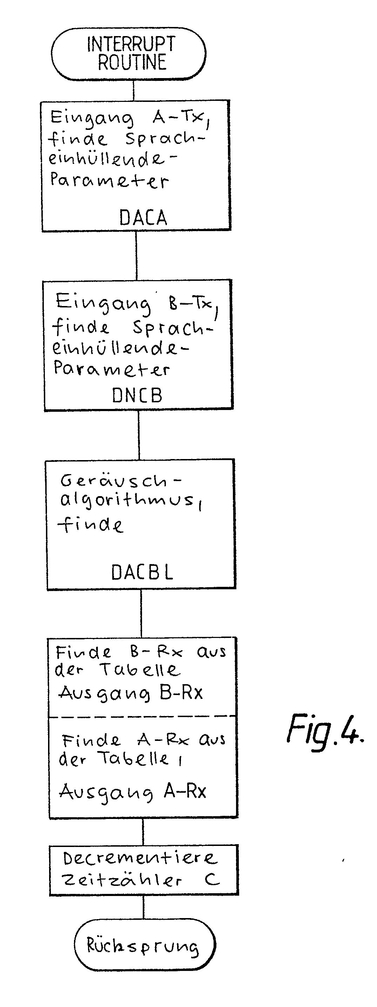

Das Flussdiagramm für die Unterbrechungsroutine ist in Fig. 4 gezeigt und enthält drei Algorithmen, die die Spracheinhüllende-Parameter für die Empfangsrichtung und für die Senderichtung und die Geräuschüberwachung bestimmen.

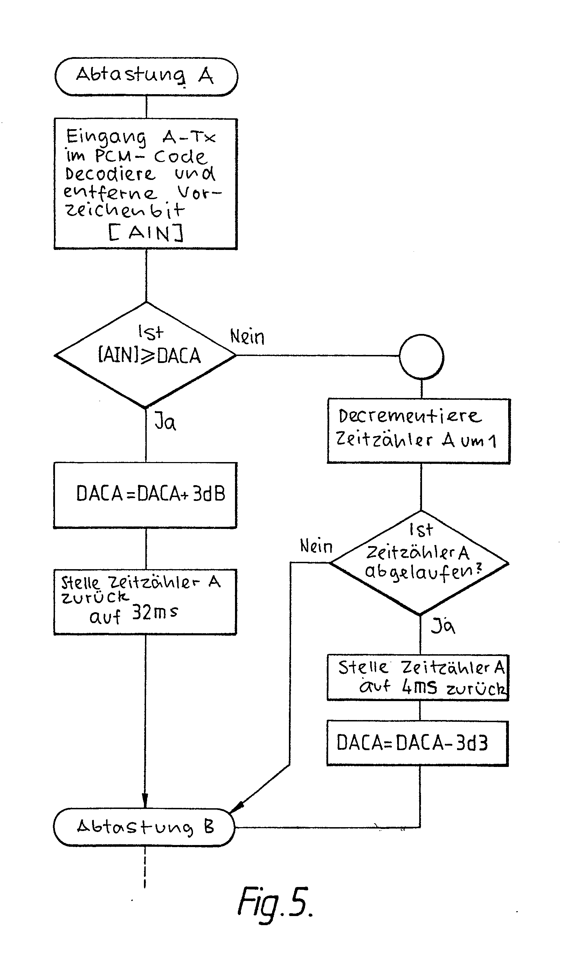

Die Spracheinhüllende wird in beiden Sprachrichtungen ständig überwacht und von einem Spitzenwerte suchenden Algorithmus zu Beginn der Unterbrechungsroutine abgeleitet. Das Ergebnis dieses Algorithmus ist ein Parameter, der die abgetastete Spracheinhüllende darstellt. Ein Flussdiagramm dieses Algorithmus ist in Fig. 5 dargestellt.

Der die Amplitude der Spracheinhüllenden repräsentierende Parameter DACA wird auf 0 zurückgesetzt, wenn das Programm am Anfang initialisiert wird. Dieser Parameter wird dann in Stufen von 3 dB alle 125 µs oder gemäss dem Abtasttakt erhöht, bis ein Spitzenwert gefunden worden ist. Der gefundene Spitzenwert veranlasst eine Verzögerung von 32 ms, wonach der Parameter DACA in Schritten von 3 dB alle 4 ms vermindert wird. Sowohl die 32 ms-Verzögerung als auch die 4 ms-Verzögerung können zurückgestellt werden, und der Parameter DACA kann auf einen neuen Wert gebracht werden, wenn festgestellt wird, dass (AIN) > DACA ist. (AIN) ist der Wert (ohne Vorzeichen) des PCM-Code in Senderichtung. Ein entsprechender Spitzenwerte suchender Algorithmus wird im Empfangsweg angewendet, wobei ein Parameter DACB abgeleitet wird. Beide Spracheinhüllende-Parameter DACA und DACB werden dem Hauptprogramm zur Verfügung gestellt.

Zurück zur Unterbrechungsroutine: beide decodierten PCM-Wörter müssen nun in ihre zugehörigen Richtungen weiterübertragen werden, und zwar das Wort A-Tx zur Richtung B-Rx und das Wort B-Tx zur Richtung A-Rx (siehe das Diagramm der Unterbrechungsroutine in Fig. 4).

Die weiterübertragenen Codezeichen stammen aus zwei Dämpfungsnachschlagetabellen. Jedes decodierte, vorzeichenlose PCM-Wort gehört zu einer Adresse in der Nachschlagetabelle; z.B. gehört zum Wort (AIN) = 1010111 die Adresse 57H. Bei dieser Adresse findet man den entsprechenden Dämpfungscode, das ist der Code mit 6 dB Dämpfung (AIN)-6 dB = 1000111 = 47H. Das ursprüngliche Vorzeichen dieses Wortes wird dann ersetzt, d.h. falls es negativ ist, ist 11000111 = C7H, und es wird dann im PCM-Format nach der A-Kennlinie durch Invertierung in alternative Ziffern codiert und schliesslich in die zugehörige Bestimmungsrichtung ausgesendet. Diese Methode kann auch bei einem PCM-Format angewendet werden, das nach der µ-Kennlinie gebildet ist, doch sehen dann die Nachschlagetabellen für die Steuerung der Dämpfungen anders aus.

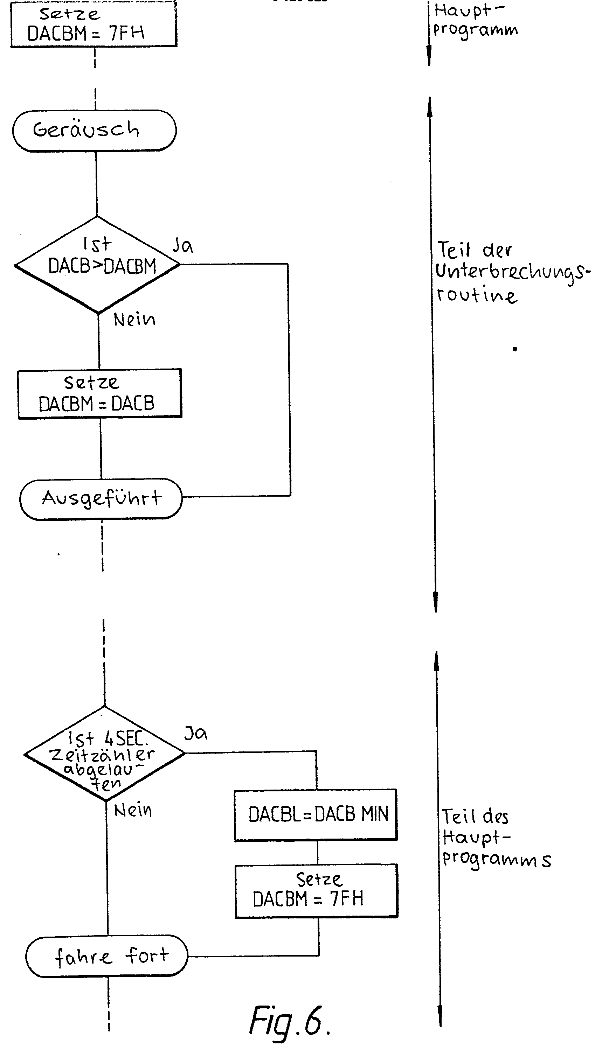

Die Unterbrechungsroutine schliesst auch einen Geräuschüberwachungsalgorithmus ein, der vom Hauptprogramm zeitgesteuert ist. Das Flussdiagramm hierzu ist in Fig. 6 gezeigt. Der Geräuschpegel am Mikrofoneingang des Freisprechapparates wird beobachtet. Als Geräuschpegel wird hierbei der Minimalwert der Einhüllenden der während einer vorgegebenen Zeitperiode gesendeten Sprache angesehen. Der Geräuschüberwachungsalgorithmus setzt einen Geräuschparameter DACBM auf einen maximalen Codeamplitudenwert zurück, das ist der Wert 7FH zu Beginn jeder Zeitperiode aus jeweils 4 Sekunden. Dieser Parameter DACBM wird dann mit dem Parameter DACB alle 125 µs verglichen und dann mit DACB gleichgesetzt, was eine Konfiguration am Ende der 4 s-Zeitperiode von DACBM = DACB min über diese Zeitperiode ergibt. DACBL bleibt über jede 4 s-Zeitperiode konstant und ist DACBL = DACB aufgrund der überwachten, vorhergehenden Zeitperiode.

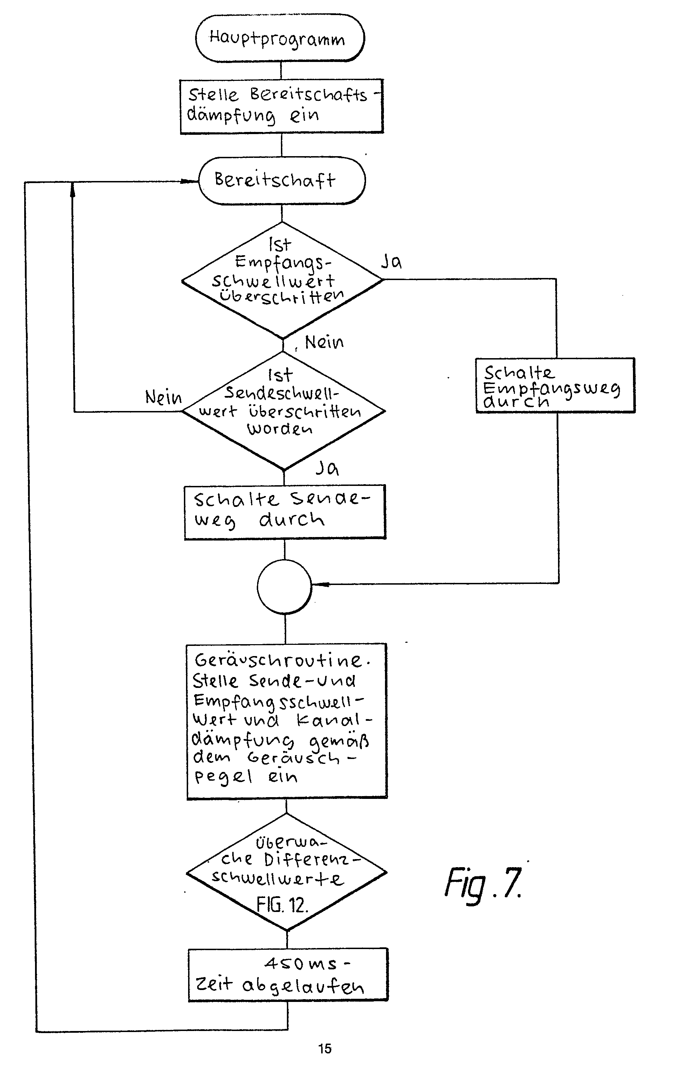

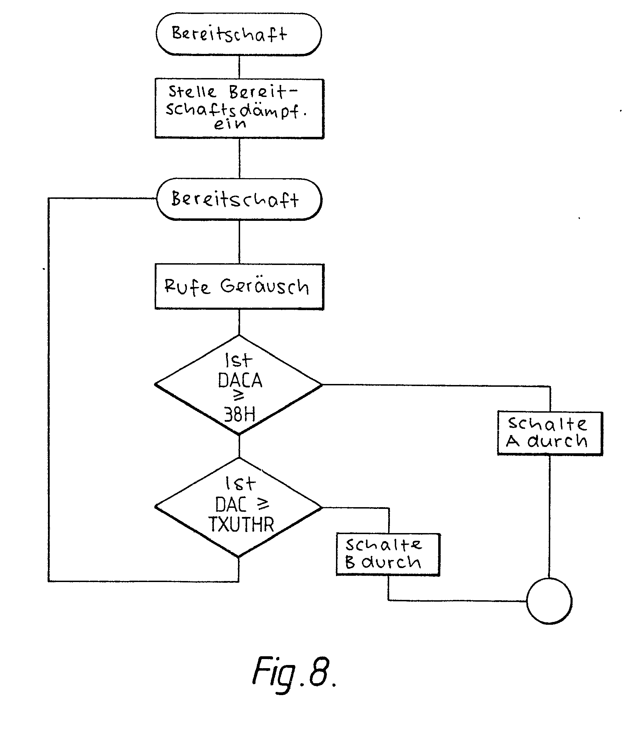

Im Hauptprogramm werden die zwei Spracheinhüllendenpegel mit zugehörigen Schwellwerten verglichen, wie es in den Flussdiagrammen in den Figuren 7 und 8 gezeigt ist. Fig. 7 zeigt einen Teil des Hauptprogramms, während Fig. 8 sich auf einen Vergleich von Spracheinhüllendenpegel DACA und DACB mit den zugehörigen Schwellwerten bezieht, wobei RxUTHR der Empfangsschwellwert und TxUTHR der Sendeschwellwert ist.

Zu Beginn sind den zwei Dämpfungsnachschlagetabellen, die sich auf die Dämpfung in den zwei Sprachkanälen beziehen, gleiche Dämpfungen gegeben, so dass der Freisprechapparat in Ruhestellung ist, in der der Sendekanal und der Empfangskanal teilweise gesperrt sind. Während dieser Ruhestellung vergleicht das Programm zuerst DACA mit dem Empfangsschwellwert. Wenn dieser Schwellwert überschritten wird, setzt sich die Programmausführung fort, indem der A-Tx-Kanal und damit die Sprechrichtung vom A-Teilnehmer zum B-Freisprechteilnehmer durchgeschaltet wird. Falls DACA unter dem Schwellwert liegt, dann wird DACB mit dem Sendeschwellwert verglichen. Diese Schwellwerte sind veränderlich und hängen vom Geräuschpegel und der Lautsprecherverstärkung ab, wie es weiter unten noch erläutert wird. Wenn DACB nun den zugehörigen Schwellwert überschreitet, dann wird der B-Tx-Kanal und damit die Sprechrichtung vom B-Freisprechteilnehmer zum fernen A-Teilnehmer durchgeschaltet. Falls keiner der beiden Schwellwerte überschritten wird, dann bleibt das Programm in der Ruheschleife.

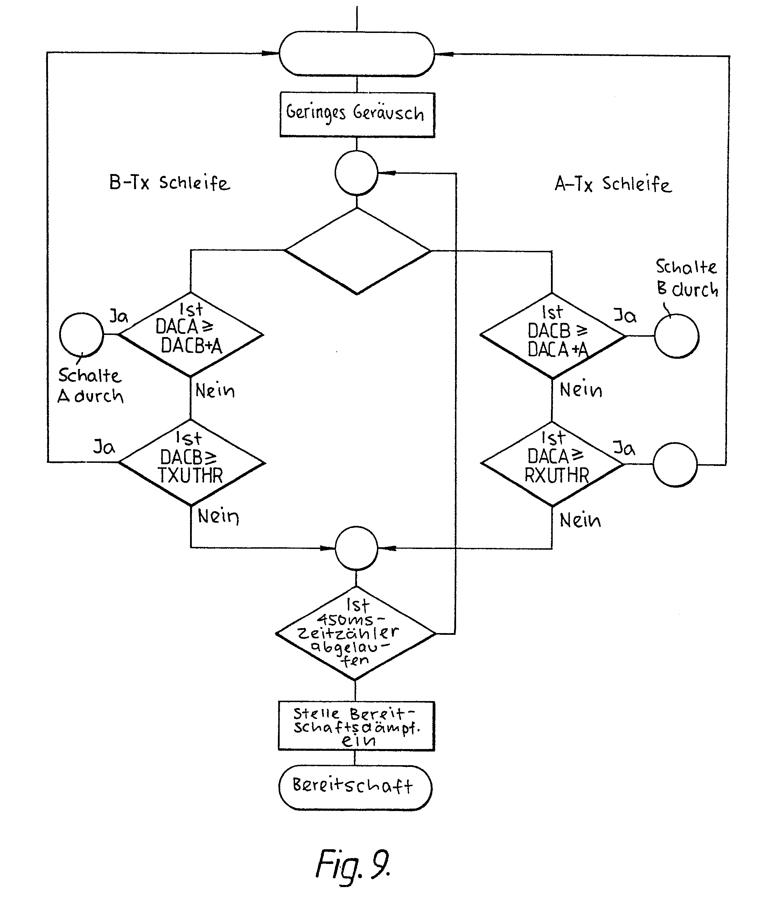

Wenn der dem B-Tx-Kanal zugeordnete Schwellwert überschritten wird, werden die Dämpfungstabellen so verändert, dass die B-Tx-Dämpfung um x dB vermindert und die A-Tx-Dämpfung um x dB erhöht wird, wobei der Wert x sich nach den Systemmerkmalen, d.h. nach der Mikronempfindlichkeit, der Vorverstärkung und dem Ruhedämpfungspegel, richtet und vorzugsweise 6 dB oder 12 dB gross sein kann. Dies erlaubt in bestimmten Grenzen auch eine automatische Einstellung der Kanalverstärkung zur Kompensation des Hintergrundgeräusches. Diese Einstellung wird in der Weise ausgeführt, dass alle 128 Codezeichen in jeder Tabelle in der Reihenfolge vom höchsten bis zum tiefsten Amplitudenwert aufgeschrieben werden. Die 128 Codezeichen sind die 128 Amplitudenpegel des decodierten, vorzeichenlosen PCM-Code, wobei diese Codezeichen jeweils aus einem 7-Bit-Wort bestehen: $2^7 = 128$ Pegel. Diese Codezeichen werden vom Prozessor dazu benutzt, um die Einstellung der Dämpfung in den Sprachkanälen zu steuern. Während einer Übergangsphase zwischen der Sprache in der einen Richtung und der Sprache in der anderen Richtung können Störungen in den Sprachmustern auftreten, die dadurch bedingt sind, dass einige PCM-codierte Abtastwerte mit verschiedenen Dämpfungspegeln zurückübertragen werden. Aber diese Übergangsphase ist so kurz, dass sie in fast allen Fällen praktisch nicht bemerkt wird. Das Flussdiagramm für die Einstellung der Nachschlagetabellen ist in Fig. 9 gezeigt. Eine andere Ausführung arbeitet mit festen Nachschlagetabellen, wobei diese Ausführung einen zusätzlichen Speicher mit 1 K für acht Dämpfungspegel braucht.

Dafür sind aber Dämpfungsschritte von 3 dB mit grösserer Genauigkeit vorhanden, als sie mit einem einfachen Algorithmus erreichbar ist. Die Übergangsphase führt bei dieser Ausführung nicht zu Störungen.

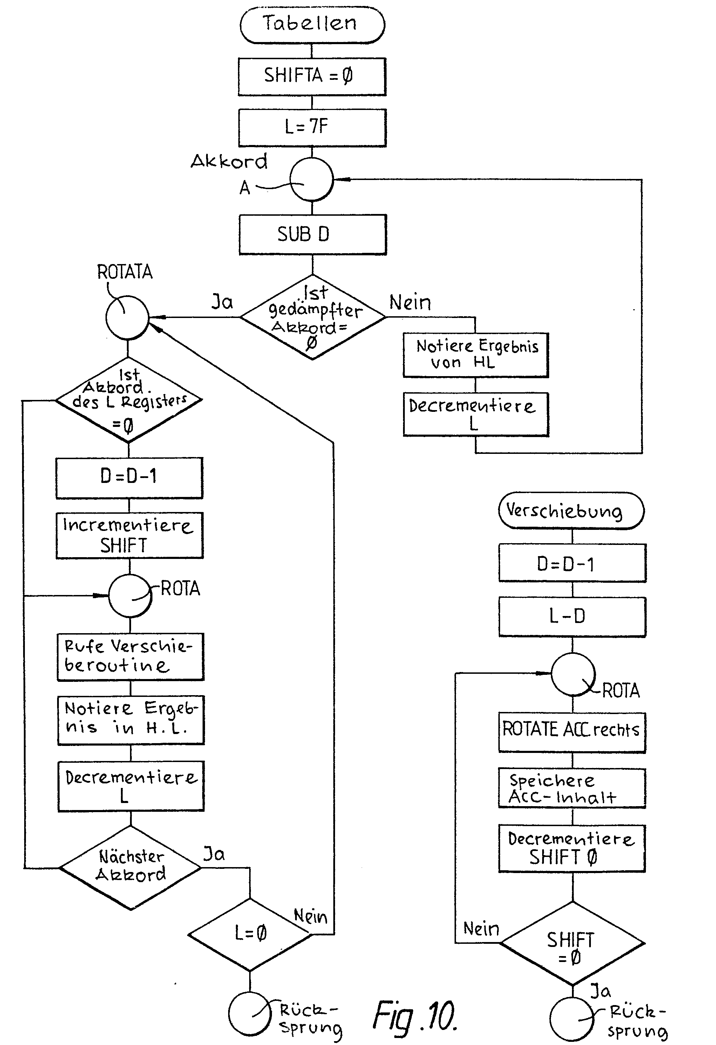

In dieser Verarbeitungsstufe tritt das Programm in eine Schleife ein, in der der Bx-Tx-Pegel oder der Ax-Tx-Pegel kontinuierlich überwacht wird, und zwar abhängig davon, welcher Kanal offen ist, und das Programm vergleicht die Ergebnisse der Beobachtung mit den gesetzten Schwellwerten. In derselben Schleife wird ein Differenzvergleich der zwei Spracheinhüllende-Parameter DACA und DACB unternommen. Wenn der B-Tx-Kanal offen ist, kann der andere Kanal zu diesem Zeitpunkt Zugang zum Gespräch gewinnen, vorausgesetzt, dass DACA sich über einem bestimmten Pegel über DACB befindet, d.h. wenn $DACA > DACB + A$ dB ist. Der Differenzschwellwert A nimmt von der Steuereinstellung der Lautsprecherverstärkung drei verschiedene Werte an, wobei die Verstärkungssteuerung in drei Bereiche eingeteilt ist, und zwar mit $A = 6$ dB im unteren Bereich, $A = 12$ dB im mittleren Bereich und $A = 18$ dB im oberen Bereich. Diese automatische Einstellung des Differenzschwellwertes ist deshalb eingeführt worden, um die Selbstabschaltung des Freisprechapparates bei relativ hohen Sprachpegeln zu vermeiden. In diesem Fall könnte eine akkustische Rückkopplung des Sprechenden, die vom Mikrofon empfangen wird, bei der Erkennung durch den Prozessor den zugehörigen Schwellwert überschreiten. Dadurch würde der Mikrofonkanal durchgeschaltet und der Sendekanal gesperrt werden, wonach die Kanäle in ihre ursprünglichen Positionen zurückschalten, weil keine Eingangsspannung am Mikrofon vorhanden ist. Wenn der Differenzschwellwert auf einen geeigneten Pegel eingestellt wird, wie vorher erwähnt wurde, dann wird dieses Abschneiden der Sprecherausgangsspannung vermieden. Diese Einstellung ist im Flussdiagramm der Fig. 10 dargestellt.

Das die Differenzschwellwerte und die Halteverzögerungszeit aufweisende Flussdiagramm ist in Fig. 9 gezeigt. Grundsätzlich gibt es zwei Schleifen in der Routine. Die B-Tx-Schleife hält den abgehenden Sendekanal offen, bis entweder das ankommende $DACA > DACB + A$ oder das abgehende $DACB < TXUTHR$ ist. Im letzten Fall läuft die Schleife weiter, bis die Haltezeit von 450 ms abgelaufen ist, wonach das Programm in die Ruhestellung zurückkehrt. Eine ähnliche Prozedur wird in der A-Tx-Schleife ausgeführt, wenn der ankommende Signalkanal offen ist.

**Patentansprüche**

1. Schaltungsanordnung für einen Freisprechapparat mit getrennten Sprachkanälen (A-Tx, B-Rx; B-Tx, A-Rx) für die abgehenden und die ankommenden Sprachsignale und mit Schaltmitteln (4, 6), die die einzelnen Kanäle sowohl auf ihre Sprachpegel als auch auf ihre Geräuschpegel hin abtasten und abhängig von einem unter Berücksichtigung der Geräuschpegel durchgeführten Vergleich der die Sprachampiltuden repräsentierenden Abtastergebnisse (DACA, DACB) mittels steuerbarer Dämpfungsglieder jeweils einen Kanal durchschalten und den anderen sperren, dadurch gekennzeichnet, dass die Abtastergebnisse (DACA, DACB) für jeden Kanal getrennt mit einem vorgegebenen Schwellenwert (RxUTHR, TxUTHR) verglichen werden, der abhängig von dem auf diesem Kanal festgestellten Geräuschpegel (DACBM) eingestellt wird und mindestens die Höhe dieses Geräuschpegels aufweist und dass die Vergleichsoperationen, die Einstellung der Schwellenwerte und die Ansteuerung der Dämpfungsglieder von einem Datenprozessor (5) durchgeführt werden.

2. Schaltungsanordnung nach Anspruch 1, dadurch gekennzeichnet, dass eine Codier-Decodiereinrichtung (3) vorgesehen ist, die die Sprachamplitude und den Geräuschpegel auf den Kanälen in digitaler Form codiert und decodiert.

3. Schaltungsanordnung nach Anspruch 2, dadurch gekennzeichnet, dass der Prozessorspeicher (6) eine Anzahl Steuerwörter aufweist, die jeweils beim Auslesen der Steuerung der Einstellung eines Dämpfungsgliedes auf einen von einer Anzahl vorgegebener Dämpfungswerte dienen, und dass bei der Feststellung, dass der überwachte Geräuschpegel sich geändert hat, eine entsprechende Justierung der Werte dieser Steuerwörter vorgenommen wird.

4. Schaltungsanordnung nach Anspruch 2 oder 3, dadurch gekennzeichnet, dass die Sprachamplitude mittels eines Spitzenwerte suchenden Prozesses gemessen wird, in dem die Sprachamplitude aufeinanderfolgend mit einer Anzahl von Werten verglichen wird, bis der gesuchte Wert gefunden ist, worauf der Vergleichsprozess beendet wird.

5. Schaltungsanordnung nach einem der Ansprüche 1 bis 4, dadurch gekennzeichnet, dass die Justierung sich nach der Kanaldämpfung richtet.

6. Schaltungsanordnung nach einem der Ansprüche 1 bis 5, dadurch gekennzeichnet, dass als Geräuschpegel der innerhalb einer vorgegebenen Zeitspanne festgestellte Minimalwert der Einhüllenden der Sprachamplitude ausgewertet wird.

**Claims**

1. Circuitry for a hands-free telephone set with separate speech channels (A-Tx, B-Rx; B-Tx, A-Rx) for the outgoing and incoming speech signals and with switching means (4, 6) which scan the individual channels both for their speech level and for their noise level and, in each case, depending on a comparison – taking account of the noise levels – of the scanning results (DACA, DACB) representing the speech amplitudes, switch one channel through and block the other, characterized in that the scanning results (DACA, DACB) are compared separately for each channel with a prescribed threshold value (RxUTHR, TxUTHR) which is set depending on the noise level (DACBM) detected in this channel and is at least as high as this noise level and that the comparison operations, the setting of the threshold values and the control of the attenuators are carried out by a data processor (5).

2. Circuitry as claimed in Claim 1, characterized in that an encoder/decoder (3) is provided which encodes and decodes the speech amplitude and the noise level in the channels in digital form.

3. Circuitry as claimed in Claim 2, characterized in that the processor memory (6) contains a number of control words which in each case, when read out, serve to control the setting of an attenuator to one of a number of prescribed attenuation values and that, when it is found that the monitored noise level has changed, a corresponding adjustment of the values of these code words is made.

4. Circuitry as claimed in Claim 2 or 3, characterized in that the speech amplitude is measured by means of a process seeking peak values in which the speech amplitude is succesively compared with a number of values until the value sought is found, whereupon the comparison process is terminated.

5. Circuitry as claimed in any one of Claims 1 to 4, characterized in that the adjustment is governed by the channel attenuation.

6. Circuitry as claimed in any one of Claims 1 to 5, characterized in that the minimum value of the envelope of the speech amplitude within a prescribed period of time is evaluated as the noise level.

**Revendications**

1. Agencement de commutation pour poste téléphonique «mains libres» comprenant des voies vocales séparées (A-Tx, B-Rx; B-Tx, A-Rx) pour les signaux de parole sortants et entrants et des moyens de commutation (4, 6), lesquels échantillonnent les voies individuelles en ce qui concerne leurs niveaux de parole et leurs niveaux de bruit, et, en fonction d'une comparaison entre les échantillons (DACA, DACB) représentant les amplitudes des signaux, conduite en tenant compte du niveau du bruit, mettent une voie en circuit et bloquent les autres, au moyen d'atténuateurs commutables, caractérisé en ce que les échantillons (DACA, DACB) de chacune des voies sont séparément comparés à une valeur de seuil prédéterminée (RxUTHR, TxUTHR), laquelle est ajustée en fonction du niveau de bruit constaté sur cette voie et atteint au moins la valeur de ce niveau de bruit, et en ce que le réglage de la valeur de seuil et la commande des atténuateurs sont réalisés par un processeur de données (5).

2. Agencement de commutation conforme à la revendication 1 caractérisé en ce qu'il comprend un dispositif de codage-décodage (3) qui code et qui décode l'amplitude des signaux de parole et le niveau de bruit sur les voies.

3. Agencement de commutation conforme à la revendication 2, caractérisé en ce que la mémoire (6) du processeur contient plusieurs mots de commande, chacun d'eux étant lu pour la commande du réglage d'un atténuateur sur l'une d'un nombre prédéterminé de valeurs d'atténuation et en ce que la détermination que le niveau de bruit supervisé a changé de valeur entraîne un ajustement de la valeur de ces mots de commande.

4. Agencement de commutation conforme à la revendication 2 ou 3, caractérisé en ce que l'amplitude des signaux de parole est mesurée au cours d'un processus de recherche de valeur crête dans lequel les amplitudes de parole successives ont comparées avec plusieurs valeurs, jusqu'à ce que la valeur recherchée soit trouvée, après quoi le processus de comparaison est interrompu.

5. Agencement de commutation conforme à l'une quelconque des revendications 1 à 4, caractérisé en ce que ledit ajustement se fait dans le sens de l'atténuation de la voie.

6. Agencement de commutation conforme à l'une quelconque des revendications 1 à 5, caractérisé en ce qu'une valeur minimale de l'enveloppe des signaux de parole, déterminée dans un intervalle de temps donné, est utilisée comme niveau de bruit.

**0 120 325**

Fig.1.

Fig.2.

Fig.3.

Fig.4.

Fig.5.

Fig.6.

Fig. 7.

Bereitschaft

Stelle Bereitschaftsdämpf.
ein

Bereitschaft

Rufe Geräusch

Ist
DACA
≥
38H

Schalte
A durch

Ist
DAC ≥
TXUTHR

Schalte
B durch

*Fig.8.*

Fig. 9.

```
        ( Tabellen )
             │
      ┌───────────────┐
      │  SHIFTA = ∅   │
      └───────────────┘
             │
      ┌───────────────┐
      │    L = 7F     │
      └───────────────┘
             │
  Akkord   ╭───╮
    A ────→│   │←──────────────────────┐
           ╰───╯                        │
             │                          │
      ┌───────────────┐                 │
      │    SUB D      │                 │
      └───────────────┘                 │
             │                          │
  ROTATA                                │
   ╭───╮         ╱ Ist ╲                │
   │   │←── Ja ─╱ gedämpfter ╲── Nein   │
   ╰───╯        ╲ Akkord=    ╱     │    │
     │           ╲   ∅     ╱       │    │
     │            ╲──────╱         │    │
   ╱ Ist ╲                  ┌───────────────┐
  ╱ Akkord. ╲               │ Notiere Ergebnis│
 ╱ des L Registers          │   von  HL     │
  ╲  = ∅  ╱                 └───────────────┘
   ╲────╱                          │
     │                     ┌───────────────┐
┌──────────────┐           │ Decrementiere │
│   D = D-1    │           │      L        │
└──────────────┘           └───────────────┘
      │                            │
┌──────────────┐                   │
│ Incrementiere│                   │
│    SHIFT     │         ( Verschiebung )
└──────────────┘                │
      │                  ┌───────────────┐
    ╭───╮  ROTA          │    D = D-1     │
    │   │                └───────────────┘
    ╰───╯                       │
      │                  ┌───────────────┐
┌──────────────┐         │     L - D      │
│ Rufe Verschie-│        └───────────────┘
│  beroutine    │               │
└──────────────┘             ╭───╮  ROTA
      │                      │   │
┌──────────────┐            ╰───╯
│ Notiere Ergeb-│            │
│ nis in H.L.   │     ┌───────────────┐
└──────────────┘      │ ROTATE ACC rechts│
      │               └───────────────┘
┌──────────────┐            │
│ Decrementiere │     ┌───────────────┐
│      L        │     │  Speichere     │
└──────────────┘      │  Acc-Inhalt    │
      │               └───────────────┘
   ╱ Nächster ╲            │
  ╱  Akkord    ╲── Ja  ┌───────────────┐
   ╲──────────╱        │ Decrementiere  │
      │                │   SHIFT ∅      │
   ╱ L=∅ ╲── Nein      └───────────────┘
   ╲────╱                    │
      │                   ╱ SHIFT ╲
    ╭───╮ Rück-   Nein ──╱   = ∅   ╲── Ja
    │   │ sprung         ╲─────────╱
    ╰───╯                    │
                          ╭───╮ Rück-
                          │   │ sprung
                          ╰───╯
```

Fig .10.